# EUROPEAN PATENT SPECIFICATION

(11) **EP 3 741 161 B1**
(45) Date of publication and mention of the grant of the patent: **20.12.2023**
(21) Application number: 18899643.3
(22) Date of filing: 15.01.2018
(51) Int. Cl.: H04W 52/02, H04W 48/16, H04W 84/12

(54) **SERVICE DISCOVERY IN WIRELESS NETWORK**
DIENSTENTDECKUNG IN EINEM DRAHTLOSEN NETZWERK
EXPLORATION DE SERVICES DANS UN RÉSEAU SANS FIL

(43) Date of publication of application: 25.11.2020
(73) Proprietor: Nokia Technologies Oy, 02610 Espoo (FI)
(72) Inventor: KASSLIN, Mika Ilkka Tapani, 02770 Espoo (FI); RANTALA, Enrico Henrik, 33100 Tampere (FI); MARIN, Janne, 02770 Espoo (FI); ALANEN, Olli Petteri, 01690 Vantaa (FI)
(74) Representative: Laine IP Oy
(86) International application number: PCT/US2018/013706
(87) International publication number: WO 2019/139627

(56) References cited:
- WO-A1-2016/131196
- US-A1- 2015 223 047
- US-A1- 2016 165 653

## Description

### Field

Various embodiments described herein relate to the field of wireless networking and, particularly, to improving a service discovery in a wireless network.

### Background

In a modern wireless network, devices may provide one another services that involve wireless transfer of messages associated with the service. However, evolution of the wireless networks is towards greater power-efficiency and user of doze periods when a device cannot be reached. This may cause delays in relation with the services.

In US2016/165653 client stations operate to configure Neighbor Awareness Networking (NAN) direct communication with neighboring client stations, comprising negotiating a datapath schedule.

### Brief description

The invention is defined by the independent claims.

Some embodiments of the invention are defined in the dependent claims.

According to an aspect, there is provided a method comprising: receiving, by an apparatus from another apparatus during a discovery window, a service discovery frame; in response to determining, by the apparatus, that the apparatus is able to transmit a data path request to the other apparatus during the discovery window, transmitting the data path request to the other apparatus during the discovery window; and in response to determining, by the apparatus, that the apparatus is not able to transmit the data path request to the other apparatus during the discovery window, transmitting a wake-up frame to the other apparatus after the discovery window and transmitting the data path request to the other apparatus during an availability window after said transmission of the wake-up frame.

According to another aspect, there is provided an apparatus comprising: means for receiving, from another apparatus during a discovery window, a service discovery frame; means for transmitting, in response to determining that the apparatus is able to transmit a data path request to the other apparatus during the discovery window, the data path request to the other apparatus during the discovery window; and means for transmitting, in response to determining that the apparatus is not able to transmit the data path request to the other apparatus during the discovery window, a wake-up frame to the other apparatus after the discovery window and for transmitting the data path request to the other apparatus during an availability window after said transmission of the wake-up frame.

According to another aspect, there is provided an apparatus comprising means for performing:
transmitting, via a main radio interface during a discovery window, a service discovery frame indicating a potential availability window; entering, upon transmitting the service discovery frame, a power-save mode in which the main radio interface is disabled; in response to receiving a wake-up frame via a wake-up radio interface from another apparatus during the power-save mode, enabling the main radio interface for the potential availability window and
receiving a data path request via the main radio interface from the other apparatus during the potential availability window; in response to not receiving the wake-up frame during the power-save mode, remaining in the power-save mode during the potential availability window.

### List of drawings

Embodiments are described below, by way of example only, with reference to the accompanying drawings, in which
Figure 1 illustrates a wireless communication scenario to which some embodiments of the invention may be applied;
Figures 2 and 3 illustrate processes for waking up a service provider device according to some embodiments of the invention;
Figure 4 illustrates time diagram of availability windows according to an embodiment;
Figures 5 and 6 illustrate embodiments where a service provider device indicates potential availability windows for use when waking the service provider device up during a power-save mode;
Figures 7 and 8 illustrate embodiments where a service provider device uses discovery windows when waking the service provider device up during a power-save mode;
Figures 9 and 10 illustrate embodiments where a service provider device uses unannounced potential availability windows when waking the service provider device up during a power-save mode; and
Figures 10 and 11 illustrate block diagrams of structures of apparatuses according to some embodiments of the invention.

### Description of embodiments

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

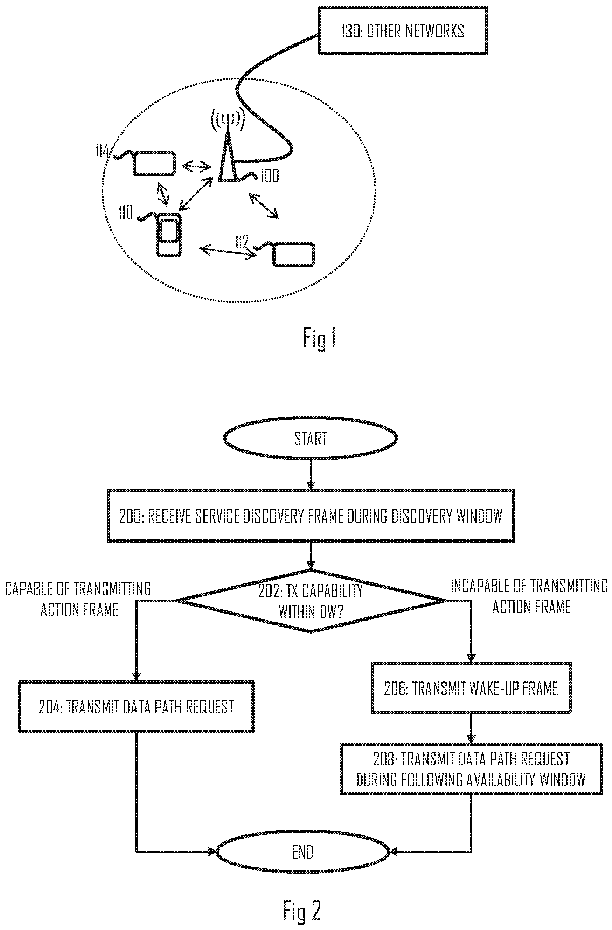

A wireless communication scenario to which some embodiments of the invention may be applied is illustrated in Figure 1. Figure 1 illustrates a plurality of wireless devices 100, 110 112, 114. A wireless device 100 may operate as an access node managing a wireless network and providing the other wireless devices 110 to 114 with wireless access, e.g. to other networks 130 such as the Internet. Some of the wireless devices 110 to 114 may form an ad hoc network. The ad hoc network may comply with neighbour awareness networking (NAN) principles described in greater detail below. The wireless devices 100 to 114 may employ a physical layer and a medium access control (MAC) layer that comply with wireless local area network (WLAN) specifications based on IEEE 802.11 but, in other embodiments, the wireless devices may support another wireless communication protocol as an alternative or in addition to the WLAN. For example, the access node 100 may provide a 802.11 network while the ad hoc network may use another physical layer and MAC specification, such as the Bluetooth ^{®} technology. In the WLAN specifications, a wireless network may be called a basic service set (BSS). While some embodiments of the invention are described in the context of the IEEE 802.11, it should be appreciated that these or other embodiments of the invention may be applicable to wireless networks based on other specifications, e.g. WiMAX (Worldwide Interoperability for Microwave Access), UMTS LTE (Long-term Evolution for Universal Mobile Telecommunication System), mobile ad hoc networks (MANET), mesh networks, and other networks having cognitive radio features, e.g. transmission medium sensing features and adaptive capability to coexist with radio access networks based on different specifications and/or standards. Some embodiments may be applicable to networks having features under development by other IEEE task groups. Therefore, the following description may be generalized to other systems as well.

The access node 100 may be a fixed access point or a mobile access point. The wireless devices 110 to 114 may be terminal devices capable of connecting to the access node 100 in addition to operating in the ad hoc network. The wireless devices 110 to 114 may have different capabilities, as described in greater detail below.

Let us now describe an embodiment of the ad hoc network of the wireless devices 110 to 114 in greater detail. Applications for short-range wireless devices are evolving to include awareness applications providing the device with awareness about a local network environment. A non-limiting example of a neighbor awareness network architecture is Neighbor Awareness Networking (NAN) technology of Wi-Fi Alliance, a network of wireless mobile devices self-organizing to support various applications, ranging from social networking to service discovery. Awareness information may be shared by a short-range wireless device sending an anonymous flooding message that may include a query, over an ad hoc network. A neighboring short-range wireless device may reply to the flooding message over the ad hoc network with a response, such as a pointer to a discovered location-based service.

Awareness information may include any information and/or context about a local network environment as well as the users and communication devices within the local network environment. Wireless devices may continuously collect and exchange information with other devices in a local network environment. Awareness applications running on short-range wireless devices may perform one or more of the following functions: create a network for sharing awareness information, locate and organize awareness information, form communities for sharing awareness information, manage power consumption for devices engaged in sharing awareness information, develop applications to take advantage of the awareness information, and maintain the privacy and anonymity of users sharing awareness information.

Awareness applications running on short-range wireless devices may employ a physical layer and a MAC layer based on the IEEE 802.11 technology. The awareness application may build upon a scheme in which every device is responsible for participating in beaconing and all the other basic operations that keep the ad hoc network in operation. An ad hoc network may be designed to have one network identifier (NWID) that all of the devices in the network share. The NWID may be announced in the beacons transmitted by the devices. In the overall design, those devices that operate under same NWID are driven to use a common and shared schedule to allow for awareness information gathering among the devices within range. The determination of which schedule is used by a device may be made by the network instance timer value, and this timer value is communicated in beacons in the timing synchronization function (TSF) value parameter. The devices may be required to operate by assuming the oldest TSF value (i.e. largest TSF value) contained in the received beacons that represent the network with the NWID in which the devices are operating. Alternatively, the devices may be required to select the schedule which to follow based on some other criteria than the TSF value. Beacons may, as an example, contain some other information than the TSF that is used by the devices to determine which schedule to use.

When a physical radio and a MAC entity of a wireless device transmits a beacon, the beacon's MAC-header may contain device's own current TSF value. The device may automatically transmit a reply message when it receives a beacon from another network, the reply message being referred herein as a beacon response message. The beacon response message contains the current TSF value of the replying network. Alternatively the beacon response message may contain other information that is used to determine which schedule to use.

Wireless devices form a network where devices in proximity may communicate with each other. When two or more groups of devices forming two or more instances of the network come close to each other, the two or more instances may merge to become one network instance. Devices may make a merging or join decision to change the instance autonomously based on the TSF information collected from beacons received during scan periods or based on the TSF information collected from received beacon response messages. A merging decision may be performed when a device receives a beacon or beacon response message with an older (greater) TSF value from another wireless device. Alternatively a merging decision may be done based on some other information available in a beacon or beacon response message from another wireless device. After the merging decision has been performed by a device, the device moves into the new network instance.

The awareness functionality in a short-range wireless device may be divided between four layers of an awareness architecture. An awareness layer and a community layer may provide services for applications, e.g. by providing an awareness application program interface (API). The approximate functional split between the different layers may be as follows.

Some embodiments may be used in a logical architecture of the Neighbor Awareness Networking (NAN) program being standardized by the Wi-Fi Alliance (WFA). The NAN protocol stack is expected to comprise of two components: 1) NAN Discovery Engine, 2) MAC with NAN support. MAC with NAN support is a variant of Wi-Fi MAC and provides means for NAN devices to synchronize in time and frequency to provide common availability periods for service discovery frames from/to the NAN Discovery Engine.

The NAN Discovery Engine may provide Publish and Subscribe services to the applications for service discovery purposes. Publishing is an ability to make application-selected information about e.g. capabilities and services available for other NAN devices that seek information with Subscribing. The publishing ability may use protocols and mechanisms certified by the Neighbor Awareness Networking program. NAN devices that use Publishing may provide published information in an unsolicited or solicited manner. Subscribing is an ability to discover information that has been made available in other NAN devices with Publishing, using protocols and mechanisms certified by the Neighbor Awareness Networking program. NAN devices that use Subscribing may passively listen for or actively seek published information.

Publish and Subscribe services are expected to exploit a discovery protocol that the NAN Discovery Engine implements and which is designed for NAN. The protocol is expected to have different protocol messages. Examples of such messages include discovery messages. The discovery messages may include unsolicited discovery messages and solicited discovery messages. Solicited discovery messages may include: 1) Discovery query message, and 2) Discovery response message. The Subscribe service is expected to use the Discovery query message to conduct active discovery. The Subscribe service may be configured to operate in the passive mode only. In this mode, no Discovery query messages are transmitted, but one listens for Discovery response messages to find the information sought. The Publishing service is expected to use the Discovery response message to announce availability of application-selected information to discovering devices.

In an embodiment, the Discovery query message may be a (NAN) Service Discovery frame of type Subscribe, or a subscribe message. Further, the Discovery response message may be a (NAN) Service Discovery frame of type Publish, or a publish message. The Service Discovery frame of type Publish, or the publish message may be transmitted in an unsolicited manner, e.g. periodically.

A (NAN) discovery message may be comprised in a discovery frame comprising one or more service descriptor attributes that relate to corresponding services. As described above, the discovery message may be a publish, a subscribe, or a follow-up message provided in the frame. The service descriptor attribute may be understood as a message header which contains, as an example, a service identifier sub-field, an instance identifier, and a service control sub-field. The service identifier sub-field carries identifier of the service. The service control sub-field, or other field, may indicate whether the message is of publish, subscribe, or follow-up type. The service control sub-field may have a length of one octet and two bits may be used to perform the indication. The frame may carry multiple discovery messages and each discovery message may have a unique service descriptor attribute.

A device in which the Subscribe service has been activated in an active mode, transmits Discovery query messages to trigger Publishing devices to transmit Discovery response messages. In parallel, the Subscribing device monitors received Discovery response messages to determine the availability of services and information being sought. Monitoring is envisioned to be a continuous process that applies to Discovery response messages received while the Subscribe service is active. With this approach, a Subscribing device may gather valuable information from Discovery response messages that are independent from its own Discovery query message transmissions.

Upon activating the NAN functions in a device, the device first looks for a NAN network by means of passive discovery. The NAN functions are activated by an application in the device requesting either the Subscribe or the Publish service to be activated, when there is no service active in the NAN Discovery Engine. On default, there is at least one NAN ID that is determined in a NAN specification and the NAN device looks for such a network and its clusters. With respect to joining a NAN network / NAN cluster, if the device finds at least one NAN cluster that the device may join, the device selects a cluster and joins it. If the device finds no NAN cluster that the device may join, the device establishes a NAN cluster of its own. An application may have also requested the Publish service to be activated in a passive mode. In such case the device doesn't ever establish a NAN cluster, but it only operates in NAN clusters that have been established by others.

NAN service discovery may be configured to happen in periodic service discovery windows. A service discovery window may occur approximately once in every 500 milliseconds (ms), as example. If a device is configured to provide a service, the device may the publish service mechanism and transmit a NAN service discovery frame (SDF) in which it advertises the availability of the service. The service may be identified with a unique service identifier in the SDF. If the service subscription requires operations like peer-to-peer ranging or data communication that require activity outside the discovery windows, the device may announce time and frequency resources for those operations with an interested peer device. Those resources may be announced by providing at least one NAN Availability attribute with at least one Potential Availability entry in the SDF. A device that announces its Potential Availability is not committed to be available for frame exchange during the announced periods, but the intent is to offer information about time and frequency that may be used in a later phase with a peer device, e.g. after or during registering the peer device to the service. If a Wi-Fi Aware device is interested in subscribing to a service available in another device within a range of the Wi-Fi Aware device, it may use a subscribe mechanism. It may passively scan for NAN SDFs with an objective to find whether some of the detected devices publish the service. Alternatively, the subscribing device may transmit NAN SDFs indicating its interest in the service with an objective to trigger the publishing devices to transmit NAN SDFs in which they announce the availability of the service together with information on resources offered for further steps in the process. Such further steps may include further service discovery, ranging setup, and/or a data path setup. Once the subscribing device has received a NAN SDF with information on the interesting service and the offered resources, it may initiate setup of the service. The setup may include NAN data link (NDL) and/or NAN data path (NDP) setup where the subscribing device transmits a corresponding NAN action frame (NAF) to the publishing device during a committed availability period. Conventionally, this first step happens during a discovery window while, later, the two devices share common resource blocks (CRBs) outside the discovery windows. In the NAF, the subscribing device announces its own availability matched with the Potential Availability announced by the publishing device.

Recent developments in 802.11 work groups have involved introduction of a new low-power radio interface called a wake-up radio (WUR). The WUR has been discussed in a WUR study group. A new task group, TGba, has been established and it will continue the work of the study group. One purpose of the new radio interface is to enable further power-savings by allowing a main radio (also known as a primary connectivity radio) interface used for data communication according to 802.11 specifications to doze for longer periods. The main radio interface is called primary connectivity radio in some contexts. The low-power radio interface is called in the study group a wake-up radio (WUR) interface or a low-power WUR (LP-WUR) interface, and it is considered to be a companion radio to the primary connectivity radio. The WUR interface may comprise transmission-only, reception-only, or transmission-reception functionality, depending on the implementation. A wireless device such as the STA may comprise both a WUR interface and the main 802.11 interface. An access node may comprise a WUR interface and the main 802.11 interface. To summarize, a device of the wireless network may include a wake-up radio (WUR) interface and a main radio interface. It has been proposed that the purpose of the wake-up radio interface is only or mainly to wake-up the main radio interface e.g. when the access node has data to transmit to a dozing device having disabled the main radio interface.

The wake-up radio interface may be designed such that it consumes less power than the main radio interface. The wake-up radio interface may employ a simpler modulation scheme than the main radio interface, e.g. the wake-up radio interface may use only on-off keying (OOK) while the main radio interface uses variable and more complex modulations schemes such as phase-shift keying and (quadrature) amplitude modulation. The wake-up radio interface may operate on a smaller bandwidth than the smallest operational bandwidth of the main radio interface, e.g. 5 Megahertz (MHz) for the wake-up radio and 20 MHz for the smallest bandwidth of the main radio interface.

Since the main purpose of the wake-up radio interface is to wake up the main radio interface, the wake-up radio interface may be powered on when the main radio interface is powered off. A wake-up radio interface of the STA may be configured to receive and extract wake-up radio frames transmitted by a wake-up radio interface of the access node. The wake-up radio interface of a wireless device may be capable of decoding the wake-up radio frames on its own without any help from the main radio interface. Accordingly, the wake-up radio interface may comprise, in addition to a radio frequency front-end receiver components, digital baseband receiver components and a frame extraction processor capable of decoding contents of a wake-up radio frame. The wake-up radio frame may comprise a destination address field indicating a wireless device that should wake up the main radio interface, and the frame extraction processor may perform decoding of the destination address from a received wake-up radio frame and determine whether or not the destination address is an address of the wireless device of the frame extraction processor. If yes, it may output a wake-up signal causing the main radio interface to wake up for radio communication with an access node or another device, e.g. the one from which the wake-up radio frame was received.

As described above, a wireless device of a wireless network may be configured to provide other wireless devices of the wireless network with a service that may involve frame transmissions between a service provider device and a service subscriber device. The service may be an application layer service such as a location service, a gaming service, an information provisioning service, a measurement service, etc. As described above, the service provider device may advertise the service during the discovery windows. The service provider device may employ power-saving options by entering a power-save mode. In some cases, the power-save mode may last over several discovery windows where the service provider device cannot be contacted by the other devices. Situations may occur where a service subscriber device detects the advertisement of the service during a discovery window but has no time to transmit an action frame that would trigger subscription to the service within the discovery window. As a consequence, the service subscriber device may be forced to wait until the service provider device returns from the power-save mode, wherein the waiting time may last even for seconds.

Figure 2 illustrates a process for contacting the service provider device. The process may be carried out in an apparatus for the service subscriber device. Referring to Figure 2, the process comprises as performed by the apparatus: receiving, from another apparatus during a discovery window, a service discovery frame (block 200); determining transmission capability of the apparatus within the discovery window (block 202); if determining that the apparatus is able to transmit a data path request to the other apparatus during the discovery window, transmitting (block 204) the data path request to the other apparatus during the discovery window; and if determining that the apparatus is not able to transmit the data path request to the other apparatus during the discovery window, transmitting a wake-up frame to the other apparatus after the discovery window (block 206) and transmitting the data path request to the other apparatus during an availability window after said transmission of the wake-up frame (block 208).

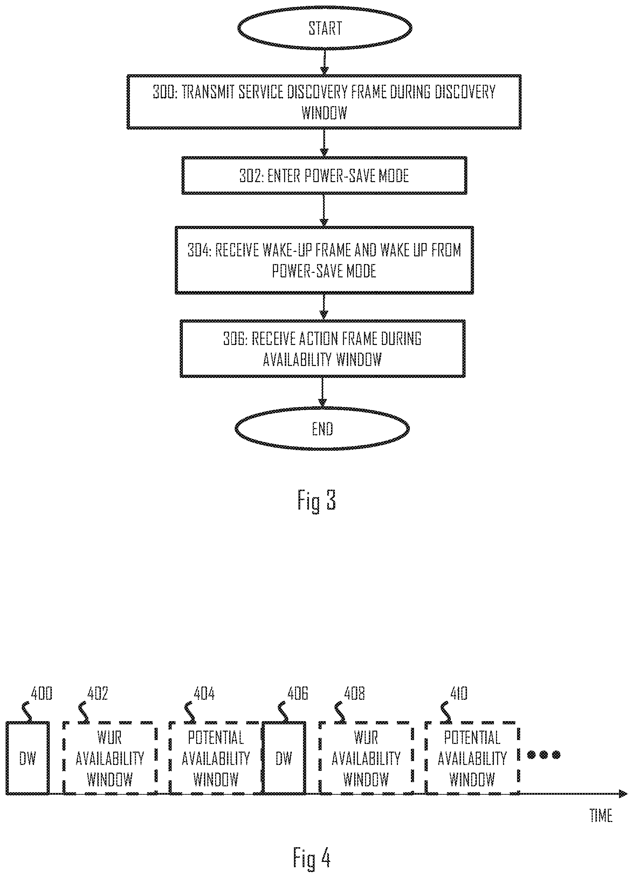

A corresponding process is illustrated in Figure 3, and the process of Figure 3 is performed by an apparatus for the service provider device. Referring to Figure 3, the process comprises as performed by the apparatus: transmitting a service discovery frame during a discovery window (block 300); entering a power-save mode upon transmitting the service discovery frame (block 302), the power-save mode set to last from the end of the discovery window over at least one discovery window; and receiving a wake-up frame from another apparatus during the power-save mode (block 304) and receiving a data path request from the other apparatus during an availability window after said reception of the wake-up frame (block 306).

An advantage provided by the processes is a reduced delay when subscribing to the service in a situation where the service provider device has entered the power-save mode.

Instead of the data path request, another action frame may be considered by the subscriber device in steps 202, 204, and 208 and received by the service provider device in block 306.

In an embodiment, the service subscriber device determines in block 202 that the apparatus is able to transmit the data path request to the other apparatus during the discovery window, when there is sufficient time to transmit the data path request and to receive an acknowledgment to the data path request. The service subscriber device may determine in block 202 that the apparatus is not able to transmit the data path request to the other apparatus during the discovery window, when there is sufficient time to transmit the data path request but not sufficient time to further receive the acknowledgment to the data path request. The subscriber device may store beforehand a time interval needed after the transmission of the data path request or another action frame to receive the acknowledgment.

Figure 4 illustrates an example of a sequence of windows employed by the service provider device and/or in the wireless network. Discovery windows 400, 406 are periodic windows where services may be advertised and/or where devices may actively query for services. Wake-up radio (WUR) availability windows 402, 408 are windows that may be used when the service provider apparatus is in the power-save mode where the main radio interface is disabled and the WUR interface is enabled. The service provider device may thus be contacted during the power-save mode by using wake-up frames transmitted during the WUR availability windows. Upon receiving the wake-up frame during the WUR availability window, the service provider device may be configured to switch from the power-save mode to an active mode and enable the main radio interface. Potential availability windows 404, 410 are windows where the service provider apparatus has indicated that it is potentially available at some stage of the service. As described above, the service provider device may advertise the potential availability windows before providing the service so that a service subscriber device may use the information to synchronize to the potential availability windows when subscribing to the service. The service provider device has not (yet) committed to be available during the potential availability windows when advertising them.

In an embodiment, the potential availability windows and the discovery windows are logically different windows with different functions associated therewith.

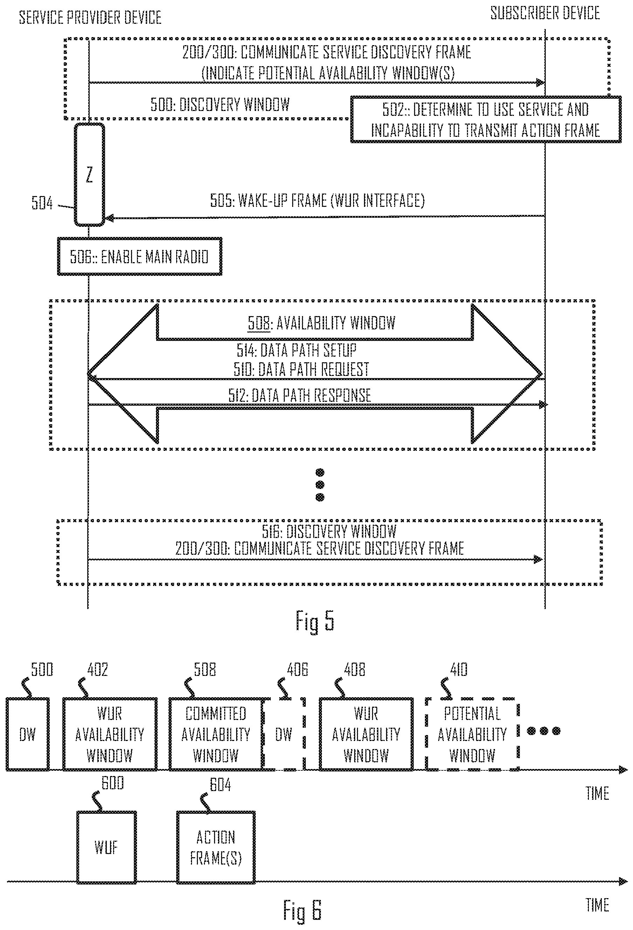

Figure 5 illustrates a signalling diagram for signalling between the service provider device and the subscriber device according to some embodiments of the invention. The same reference numbers as used in Figures 2 and 3 represent the same or substantially similar operations or functions. Referring to Figure 5, the service provider device transmits and the subscriber device receives the service discovery frame (step 200/300) during the discovery window 500.

In an embodiment, the service discovery frame comprises at least one information element indicates a start time and a duration of an availability window. The availability window may be the next discovery window where the service provider device can next be contacted by using the main radio interface. In another embodiment, the availability window is the potential availability window separate from the discovery windows. The information element(s) may indicate the availability window by using a start time and duration of the availability window. These embodiments are discussed in greater detail below.

In an embodiment, the service discovery frame comprises at least one information element indicating the WUR availability windows where the service provider device is available through the WUR interface. The at least one information element may indicate a WUR availability window as a member of periodic WUR availability windows. In an embodiment applied to the NAN, the at least one information element comprises a NAN attribute for a publishing device (the service provider device) to use to announce its committed availability through the WUR interface. The NAN attribute may be specified to the attribute category of non-NAN operations attributes along with other attributes such as Extended WLAN Infrastructure attribute, Extended P2P Operation attribute, Extended IBSS attribute, and Extended Mesh attribute. The NAN attribute may be called WUR Availability attribute and it may have the format shown in Table 1.

**Table 1**

| **Field** | Size (octets) | Value | Description |
|---|---|---|---|
| Attribute ID | 1 | 0x28 | Identifies the type of NAN attribute |
| Length | 2 | Variable | Length of the following fields in the attribute |
| WID | 2 | Variable | Wake-up identifier assigned by the publisher for use in wake-up frames transmitted to it |
| Schedule ID | 1 | Variable | Identify the associated WUR availability schedule |
| Starting Time | 4 | Variable | The starting time of the first indicated WUR availability window expressed in terms of the lower 4 bytes of the NAN TSF. |
| Duration | 4 | Variable | The duration for each WUR availability window in units of microseconds. |
| Period | 4 | Variable | The time between two consecutive WUR availability windows in units of microseconds. |
| Count Down | 1 | Variable | Number of indicated WUR availability windows. The value of 255 indicates the WUR availability windows do not end until next update. The value of 0 indicates that the remaining WUR availability windows are cancelled. |
| Channel Info | Variable | Variable | Identifies the WUR channel relevant for the WUR availability window. |

One WUR attribute may contain WUR availability schedule and, in order to announce multiple WUR availability schedules, multiple WUR attributes may be included in the service discovery frame. When defining the time and frequency of the WUR availability windows 402, 408, the service provider device may take into account, as an example, its other communication duties such as operation in a Wi-Fi infra connection. The service provider device may be, for example, a concurrent device operating concurrently as an infrastructure access node and as a NAN device by using the 802.11 physical layer. The device may, as an example, use the WUR also when operating as the infrastructure access node and, if the WUR is used in a duty-cycled manner, the device may decide to use the same WUR duty cycles in a infrastructure access node interface and in the NAN interface. Accordingly, the WUR attribute may specify those WUR availability windows that the service provider device readily applies in another connection, e.g. the infrastructure access node interface.

Referring to Figures 4 and 6, the service provider device may specify the timings of the WUR availability windows 402, 408 in the service discovery frame. Accordingly, the subscriber device receiving the service discovery frame becomes aware when and how the service provider device can be contacted in a case where the main radio interface of the service provider device is disabled.

The embodiment of Figure 5 uses the feature where the service provider device indicates the potential availability window(s) 404, 410 in the service discovery frame. In the same manner as indicating the WUR availability windows, the service provider device may include in the service discovery frame at least one information element that specifies the timing of the potential availability windows, e.g. the start time, duration, and periodicity of the potential availability windows. In some embodiments where there are multiple options for a channel of the potential availability windows, the service provider device may include a channel of the potential availability windows. The channel may be a frequency channel. The potential availability windows distinguish from the WUR availability windows with at least two characteristics: the service subscriber device does not commit to be available in the potential availability windows when transmitting the service discovery frame; and the potential availability windows are for the main radio interface.

In an embodiment, the service discovery frame potential indicates a potential availability window 404 as a member of periodic potential availability windows 404, 410, etc. As described above, the potential availability windows may be defined by using a starting time parameter and a periodicity parameter.

The service provider device may indicate in the discovery frame that it shall enter the power-save mode. The service provider device may specify in the discovery frame the duration of the power-save mode. The service provider device may, implicitly or explicitly, indicate the next discovery window in which it shall be available through the main radio interface. Referring to Figure 6, the service provider device may, upon transmitting the discovery frame, enter the power-save mode (step 504) that lasts over one or more discovery windows 406. However, the service provider device may have the WUR interface enabled during the WUR availability windows 402, 408 indicated in the discovery frame.

Referring again to Figure 5, the subscriber device receiving the service discovery frame may determine to use the service in block 502. However, the device may also detect in block 502 that there is not enough time left in the discovery window 500 for the subscriber device to transmit a further frame to the service provider, e.g. an action frame such as a data path request frame. As a consequence, the subscriber device configures its WUR interface to generate and transmit a wake-up frame comprising the WID indicated by the service provider device in the discovery frame. The WUR interface may transmit the wake-up frame 600 during the WUR availability window 402 indicated in the service discovery frame (step 505).

During the indicated WUR availability windows, the service provider device scans for wake-up frames addressed to it, i.e. frames where the WID is set to the value indicated by the service provider device in the WUR attribute. In addition to the WID-based validation in an embodiment using the NAN, the service provider device may also check whether a frame check sum (FCS) of the received wake-up frame has the service provider device's NAN Management Interface Address (NMI) embedded. The NMI is a 6-octet MAC address that a NAN device uses as a transmit address (TA) when transmitting NAN Beacon frames and service discovery frames, for example. The subscriber device may acquire the TA from an A2 field of the service discovery frame received from the service provider device and add it into the wake-up frame. The service provider device may consider a wake-up frame valid if the wake-up frame contains the WID assigned by itself and communicated in the service discovery frame and if the wake-up frame's FCS embeds the service provider device's NMI.

Upon receiving the wake-up frame through the WUR interface in step 505 and detecting that the wake-up frame is addressed to it, the service provider device may enable the main radio interface in block 506 such that the main radio interface is available for frame communications in the subsequent availability window 508. Accordingly, the potential availability window indicated in the service discovery frame becomes a committed availability window where the service provider can be contacted by the subscriber device. In other words, the committed availability window has the start time and the duration of a potential availability window indicated in the service discovery frame. As a consequence, the devices may exchange action frames 604 during the committed availability window 508. The action frames may include action frames related to data path setup 514 for the service. Such action frames may include the data path request frame and a data path response frame in steps 510 and 512, for example.

Depending on whether the service is established for the subscriber device, the subsequent potential availability windows 410 may become committed availability windows for the service. The subsequent discovery windows 406, 516 may also be used for frame transmissions by the service provider device even in the case where the service provider device initially (planned to stay in the power-save mode 504 over the windows. However, if the service is not established, the service provider device may return to the power-save mode after the committed availability window 508, or after one or more subsequent availability windows 410 if needed for the exchange of action frames, and stay in the power-save mode until the planned end of the power-save mode indicated in the service discovery frame in step 200.

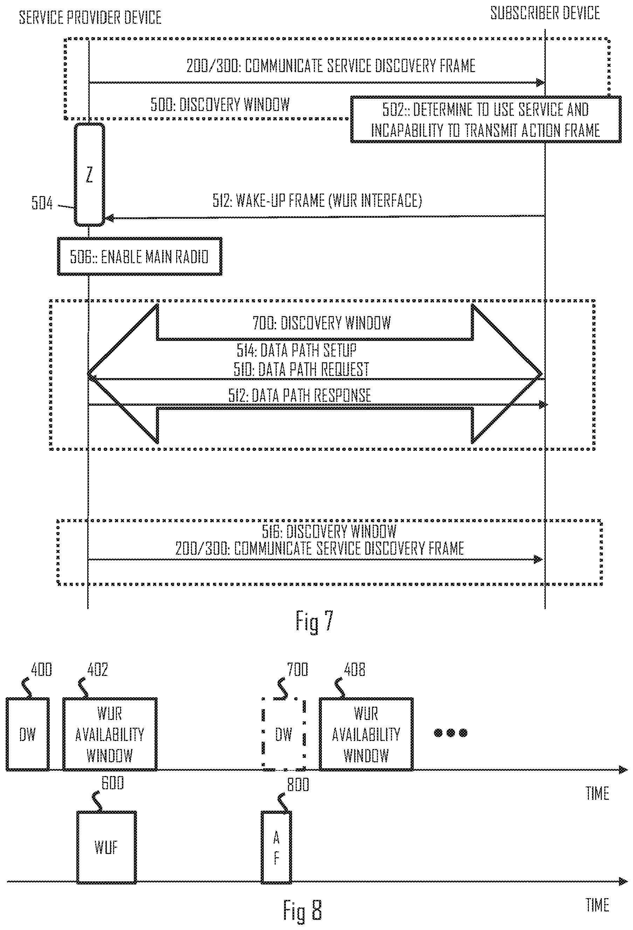

Figures 5 and 6 illustrate an embodiment where the service provider device advertises the potential availability windows for use in frame exchange between committed discovery windows indicated in the service discovery frame. Figures 7 and 8 illustrate an embodiment where the availability window for the exchange of the action frame after the wake-up frame is the discovery window. Referring to Figure 7, the service provider device may, in step 200, transmit the service discovery frame that does not indicate the potential availability windows. The service discovery frame may or may not include the WUR availability attribute indicating the WUR availability window(s) 402 and/or 408. In the latter embodiment, the service provider device may maintain the WUR interface enabled for the whole duration of the power-save mode. It may be that the service provider device has the capability of indicating also the potential availability windows according to the embodiment of Figure 6 but it determines to transmit the service discovery frame without the information element(s) indicating the potential availability windows.

When the service subscriber device does not detect the indication of the potential availability windows in the service discovery frame received in step 300, the service subscriber device may determine that the service provider device, when woken up with the wake-up frame, is available during a discovery window following the wake-up frame. As a consequence, upon transmitting the wake-up frame 600 (Figure 8) during the WUR availability window 402, the service subscriber device may transmit the action frame 800 during the subsequent discovery window 700. Upon receiving the wake-up frame in step 512, the service provider device may enable the main radio interface (block 506) before the discovery window 700 to receive the action frame 800. For the sake of clarity, the discovery window 700 may be one of the discovery windows over which the service provider device initially planned to stay in the power-save mode when transmitting the discovery frame in step 200.

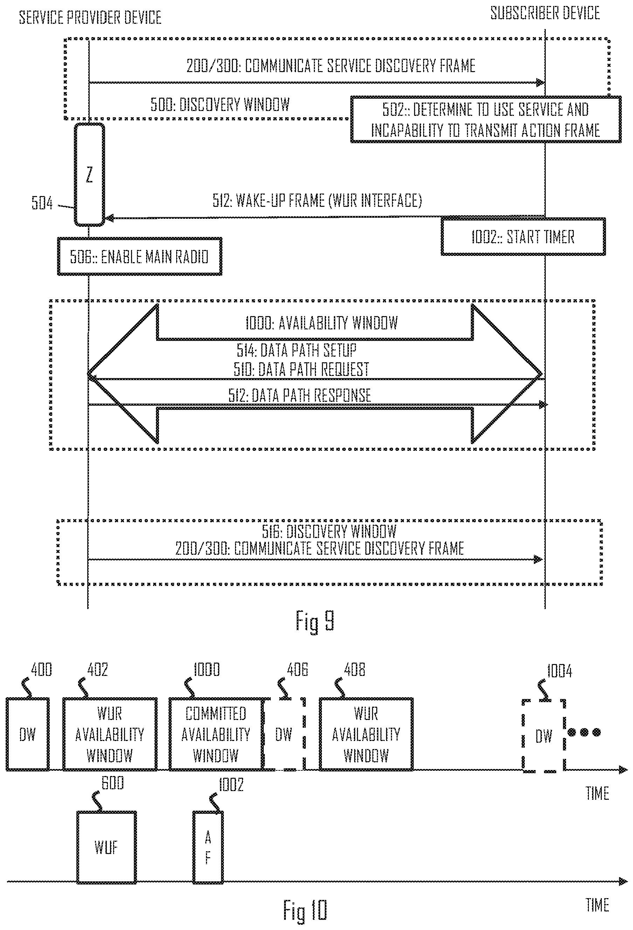

Figures 9 and 10 illustrate an embodiment where the service provider device may again transmit a discovery frame in step 200 that does not contain an indication of potential availability windows. In this embodiment, the availability windows separate from the discovery windows are still employed upon waking up the service provider device. The timing of the availability window may be defined by transmission timing of the wake-up frame 600. The availability window may start after a determined time interval from the transmission of the wake-up frame. The determined time interval may comprise a wake-up delay of the service provider device. The wake-up delay may include a processing time of the wake-up frame at the service provider device and a delay for activating the main radio interface. Referring to Figures 9 and 10, up transmitting the wake-up frame in step 512, the subscriber device may start a timer counting the determined time interval. Upon expiry of the timer, the subscriber device may determine that the availability window 1000 has started and transmit the action frame 1002 during the availability window. Upon receiving the wake-up frame in step 512 during the power-save mode 504, the service provider device may enable the main radio and start scanning for action frames during the availability window.

In an embodiment the availability window 1000 may be provided in a default channel, e.g. a frequency channel. The channel may be the same channel used for transmitting the service discovery frame in step 200. In another embodiment, the subscriber device may define the channel of the availability window 100 in the wake-up frame. Accordingly, the subscriber device may select the channel for the availability window and add to the wake-up frame an information element indicating the channel of the availability window. The channel may not be known to the service provider device before receiving the wake-up frame. After receiving the wake-up frame in step 512, the service provider device may determine the channel of the availability window 1000 from the wake-up frame and configure the main radio interface to the determined channel in block 506.

The above-described embodiments may be carried out in a wireless network comprising the proxy apparatus, the wireless device, and the subscriber device. The wireless network may be any one of the above-described networks, e.g. the NAN network or an infrastructure network comprising at least one access node. In other words, the use of the availability windows (for WUR and/or for main radio) may be supported by an infrastructure network or by a peer network.

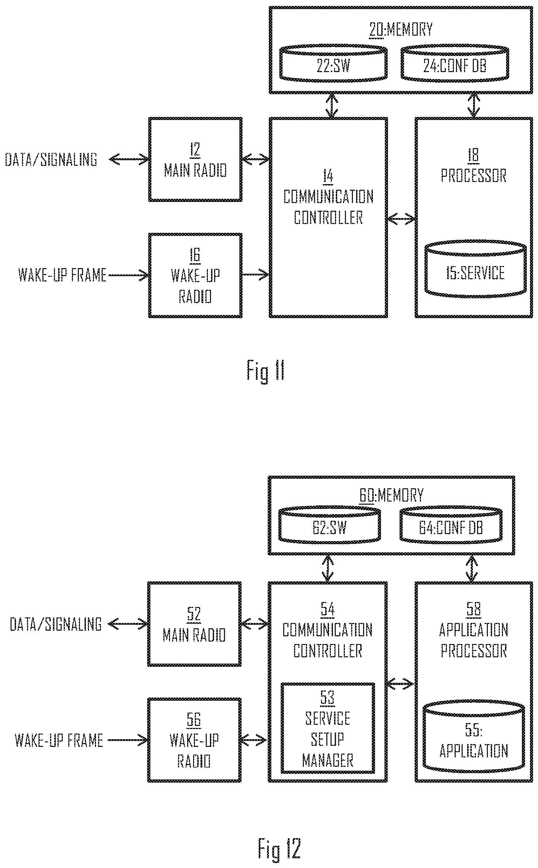

Figure 11 illustrates an embodiment of a structure of the above-mentioned functionalities of an apparatus executing the process of Figure 3 or any one of the embodiments performed by the service provider device. The apparatus may be the service provider device. The apparatus may comply with specifications of an IEEE 802.11 network and/or another wireless network such as the NAN network. The apparatus may be an access node, a station and/or a mobile terminal. The apparatus may be defined as a cognitive radio apparatus capable of adapting its operation to a changing radio environment, e.g. to changes in parameters of another system on the same frequency band. The apparatus may be or may be comprised in a computer (PC), a laptop, a tablet computer, a cellular phone, a palm computer, a sensor device, or any other apparatus provided with radio communication capability. In another embodiment, the apparatus carrying out the above-described functionalities of the service provider device is comprised in such a device, e.g. the apparatus may comprise a circuitry, e.g. a chip, a chipset, a processor, a micro controller, or a combination of such circuitries in any one of the above-described devices. The apparatus may be an electronic device comprising electronic circuitries for realizing some embodiments of the present invention.

Referring to Figure 11, the apparatus may comprise the above-described main radio interface 12 configured to provide the apparatus with capability for bidirectional communication with other wireless devices in a wireless network. The main radio interface 12 may operate according to 802.11 technology on a physical layer and a MAC layer, for example. The main radio interface 12 may comprise analogue radio communication components and digital baseband processing components for processing transmission and reception signals. The main radio interface 12 may support multiple modulation formats.

The apparatus may further comprise the above-described wake-up radio interface 16 comprising at least a reception circuitry for receiving the wake-up frames. The wake-up radio interface 16 may be configured for reception only but, in some embodiments, the wake-up radio interface may enable bidirectional communications where the wake-up radio interface 16 has transmission capability. The wake-up radio interface 16 may comprise analogue radio communication components and digital baseband processing components for processing at least reception signals. The wake-up radio interface 16 may support a single modulation scheme only, e.g. the on-off keying. In other embodiments, the wake-up radio interface 16 may support two or more modulation schemes.

The main radio interface and the wake-up radio interface may comprise radio interface components providing the apparatus with radio communication capability within one or more wireless networks. The radio interface components may comprise standard well-known components such as an amplifier, filter, frequency-converter, (de)modulator, and encoder/decoder circuitries and one or more antennas.

The apparatus may further comprise a memory 20 storing one or more computer program products 22 configuring the operation of at least one processor of the apparatus, e.g. a communication controller 14 or a processor 18 described below. The memory 20 may further store a configuration database 24 storing operational configurations of the apparatus. The configuration database may, for example, store configuration parameters for services provided by the apparatus. The configuration database 24 may further store parameters of the power-save mode, e.g. the configurations of the availability window(s).

The apparatus may further comprise a communication controller 14 configured to control the operation of the main radio interface 12 and the wake-up radio interface 16. The communication controller may, upon determining to enter the power-save mode, disable the main radio interface 12 and enable the WUR interface 16. Upon receiving the wake-up frame through the WUR interface 16 during the power-save mode, the communication controller 14 may determine the next availability window and enable the main radio interface 12 before the availability window.

The apparatus may further comprise a processor or a processing circuitry 18 configured to control execution of the service(s) 15 provided by the apparatus according to any one of the above-described embodiments. The processor 18 may control the communication controller 14 to carry out frame exchanges with the subscriber devices through the main radio interface 16 when providing the service.

In an embodiment, the apparatus comprises at least one processor and at least one memory 20 including a computer program code 22, wherein the at least one memory and the computer program code are configured, with the at least one processor, to cause the apparatus to carry out the functionalities of the service provider device according to any one of the embodiments of Figures 3 to 10. According to an aspect, when the at least one processor executes the computer program code, the computer program code causes the apparatus to carry out the functionalities according to any one of the embodiments of Figures 3 to 10. According to another embodiment, the apparatus comprises the at least one processor and at least one memory 20 including a computer program code 22, wherein the at least one processor and the computer program code 22 perform the at least some of the functionalities of the service provider device according to any one of the embodiments of Figures 3 to 10. Accordingly, the at least one processor, the memory, and the computer program code form processing means for carrying out some embodiments in the service provider device. According to yet another embodiment, the apparatus carrying out some embodiments in the service provider device comprises a circuitry including at least one processor and at least one memory 20 including computer program code 22. When activated, the circuitry causes the apparatus to perform the at least some of the functionalities of the service provider device according to any one of the embodiments of Figures 3 to 10.

Figure 12 illustrates an embodiment of a structure of the above-mentioned functionalities of the apparatus executing the process of Figure 2 or any one of the embodiments performed by the service subscriber device. The apparatus may be the subscriber device. The apparatus may comply with IEEE 802.11 technology and/or another wireless networking technology. The apparatus may be defined as a cognitive radio apparatus capable of adapting its operation to a changing radio environment, e.g. to changes in parameters of another system on the same frequency band. The apparatus may be or may be comprised in a computer (PC), a laptop, a tablet computer, a cellular phone, a palm computer, a sensor device, or any other apparatus provided with radio communication capability. In another embodiment, the apparatus carrying out the above-described functionalities is comprised in such a subscriber device, e.g. the apparatus may comprise a circuitry, e.g. a chip, a chipset, a processor, a micro controller, or a combination of such circuitries in any one of the above-described devices. The apparatus may be an electronic device comprising electronic circuitries for realizing some embodiments of the present invention.

Referring to Figure 12, the apparatus may comprise the above-described main radio interface 52 configured to provide the apparatus with capability for bidirectional communication other wireless devices. The main radio interface 52 may operate according to 802.11 specifications, for example. The main radio interface 52 may comprise analogue radio communication components and digital baseband processing components for processing transmission and reception signals. The main radio interface 52 may support multiple modulation formats.

The apparatus may further comprise the above-described wake-up radio interface 56 comprising a transmission circuitry for transmitting the wake-up frames. The wake-up radio interface 56 may be configured for transmission only but, in some embodiments, the wake-up radio interface may enable bidirectional communications where the wake-up radio interface 56 has reception capability. The wake-up radio interface 56 may comprise analogue radio communication components and digital baseband processing components for processing at least transmission signals. The wake-up radio interface 16 may support a single modulation scheme only, e.g. the on-off keying. In other embodiments, the wake-up radio interface 16 may support two or more modulation schemes.

The main radio interface and the wake-up radio interface may comprise radio interface components providing the apparatus with radio communication capability within one or more wireless networks. The radio interface components may comprise standard well-known components such as an amplifier, filter, frequency-converter, (de)modulator, and encoder/decoder circuitries and one or more antennas.

The apparatus may further comprise a memory 60 storing one or more computer program products 62 configuring the operation of at least one processor of the apparatus. The memory 60 may further store a configuration database 64 storing operational configurations of the apparatus. The configuration database 64 may, for example, store rules for transmitting the action frame(s) after transmitting the wake-up frame, as described in the embodiments above.

The apparatus may further comprise a communication controller 54 managing communications in the apparatus and controlling the operation of the radio interfaces 52, 56 according to any one of the above-described embodiments. The communication controller 54 may comprise a service setup manager 53 as a sub-circuitry. The service setup manager 53 may be configured to initialize a setup of a service provided by the service provider device. The service setup may comprise exchange of one or more action frames with which the apparatus subscribes to the service.

The apparatus may further comprise an application processor 58 configured to execute an application 55 using the service provided by the service provider device in the above-described manner. The application processor 58 may determine to use the service. Upon so determining, the application processor 58 may first control the communication controller 54 to scan for a service provider apparatus providing the service. Upon detecting the service provider device, the communication controller may use the service setup manager to subscriber to the service. Upon detecting the service during a discovery window in the above-described situation where inadequate number of action frames can be exchanged with the service provider device before the service provider device enters the power-save mode, the communication controller 54 may use the wake-up radio interface 56 to wake up the service provider device to carry out or finish the service setup. When the setup is completed, the service setup manager may indicate the establishment of the service to the application 55 and, thereafter, the application may start using the service. The application may communicate with the communication controller regarding exchange of data frames during the service.

In an embodiment, the apparatus comprises at least one processor and at least one memory 60 including a computer program code 62, wherein the at least one memory and the computer program code are configured, with the at least one processor, to cause the apparatus to carry out the functionalities of the subscriber device according to any one of the embodiments of Figures 2 and 4 to 10. According to an aspect, when the at least one processor executes the computer program code, the computer program code causes the apparatus to carry out the functionalities according to any one of the embodiments of Figures 2 and 4 to 10. According to another embodiment, the apparatus comprises the at least one processor and at least one memory 20 including a computer program code 22, wherein the at least one processor and the computer program code 22 perform the at least some of the functionalities of the subscriber device according to any one of the embodiments of Figures 2 and 4 to 10. Accordingly, the at least one processor, the memory, and the computer program code form processing means for carrying out some embodiments of the present invention in the subscriber device. According to yet another embodiment, the apparatus carrying out some embodiments of the invention in the subscriber device comprises a circuitry including at least one processor and at least one memory 20 including computer program code 22. When activated, the circuitry causes the apparatus to perform the at least some of the functionalities of the subscriber device according to any one of the embodiments of Figures 2 and 4 to 10.

Above, embodiments of the main radio interface and the WUR interface have been described mainly in a context where they are defined as separate hardware interfaces. From another perspective, the interface may be understood as logical interfaces of radio links. The main radio interface may be a first end point of a first radio link (e.g. a main radio link) between wireless devices. The second radio interface (e.g. the WUR interface) may be a second end point of a second radio link (e.g. the WUR link) between wireless devices. The first radio link may be used by a first radio device, e.g. a main radio device, and the second radio link may be used by a second radio device, e.g. a WUR radio device. The main radio interface and the WUR interface may have dedicated hardware. In another embodiment, the main radio interface and the WUR interface may share at least some hardware of the apparatus.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 2 to 10 may also be carried out in the form of one or more computer processes defined by one or more computer program. A separate computer program may be provided in one or moreapparatuses that execute functions of the processes described in connection with the Figures. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

Embodiments described herein are applicable to wireless networks defined above but also to other wireless networks. The protocols used, the specifications of the wireless networks and their network elements develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. Embodiments are not limited to the examples described above but may vary within the scope of the claims.

## Claims

1. A method comprising:
receiving (200), by an apparatus from another apparatus during a discovery window (500), a service discovery frame;
in response to determining (202), by the apparatus, that the apparatus is able to transmit a data path request to the other apparatus during the discovery window, transmitting (204) the data path request to the other apparatus during the discovery window; and
in response to determining, by the apparatus, that the apparatus is not able to transmit the data path request to the other apparatus during the discovery window, transmitting (206) a wake-up frame to the other apparatus after the discovery window and transmitting (208) the data path request to the other apparatus during an availability window (508) after said transmission of the wake-up frame.

2. The method of claim 1, wherein the service discovery frame indicates a start time and a duration of a potential availability window, and wherein the availability window (508) has the start time and the duration of the potential availability window.

3. The method of claim 1 or 2, wherein the other apparatus is in a power-save mode between the discovery window (500) and the availability window (508).

4. The method of any preceding claim, wherein the wake-up frame is transmitted (206) via a wake-up radio interface (56) of the apparatus, and wherein the data path request is transmitted (204; 208) via a main radio interface (52) of the apparatus.

5. The method of any preceding claim, wherein the other apparatus is a service provider apparatus.

6. The method of any preceding claim, wherein the service discovery frame is of type publishing according to Wi-Fi neighbor awareness networking technology.

7. The method of any preceding claim, wherein the wake-up frame is transmitted (206) during a wake-up radio availability window communicated in the service discovery frame.

8. An apparatus comprising means for performing:
receiving (200), from another apparatus during a discovery window (500), a service discovery frame;
in response to determining (202) that the apparatus is able to transmit a data path request to the other apparatus during the discovery window, causing transmission (204) of the data path request to the other apparatus during the discovery window; and
in response to determining that the apparatus is not able to transmit the data path request to the other apparatus during the discovery window, causing transmission (206) of a wake-up frame to the other apparatus after the discovery window and transmission (208) of the data path request to the other apparatus during an availability window (508) after said transmission of the wake-up frame.

9. The apparatus of claim 8, wherein the service discovery frame indicates a start time and a duration of a potential availability window, and wherein the availability window (508) has the start time and the duration of the potential availability window.

10. The apparatus of claim 8 or 9, wherein the other apparatus is in a power-save mode between the discovery window (500) and the availability window (508).

11. The apparatus of any preceding claim 8 to 10, wherein the apparatus further comprises means for causing transmission (206) of the wake-up frame via a wake-up radio interface (56) and transmission (204; 208) of the data path request via a main radio interface (52).

12. The apparatus of any preceding claim 8 to 11, wherein the other apparatus is a service provider apparatus.

13. The apparatus of any preceding claim 8 to 12, wherein the service discovery frame is of type publishing according to Wi-Fi neighbor awareness networking technology.

14. An apparatus comprising means for performing:
transmitting (300) of a service discovery frame via a main radio interface (12) during a discovery window (500), the service discovery frame indicating a potential availability window;
entering (302), upon transmitting the service discovery frame, a power-save mode in which the main radio interface is disabled;
in response to receiving (304) a wake-up frame via a wake-up radio interface from another apparatus during the power-save mode, enabling the main radio interface for the potential availability window and receiving (306) a data path request via the main radio interface from the other apparatus during the potential availability window;
in response to not receiving the wake-up frame during the power-save mode, remaining in the power-save mode during the potential availability window.

15. The apparatus of any preceding claim 8 to 14, wherein the means comprises:
at least one processor; and
at least one memory comprising computer program code, the at least one memory and
computer program code configured to, with the at least one processor, cause the performance of the apparatus.

## Patentansprüche

1. Verfahren, das Folgendes umfasst:
Empfangen (200) eines Dienstentdeckungsframes durch eine Vorrichtung von einer anderen Vorrichtung während eines Entdeckungsfensters (500);
in Reaktion auf das Bestimmen (202) durch die Vorrichtung, dass die Vorrichtung in der Lage ist, während des Entdeckungsfensters eine Datenpfadanforderung zur anderen Vorrichtung zu übertragen, Übertragen (204) der Datenpfadanforderung während des Entdeckungsfensters zur anderen Vorrichtung; und
in Reaktion auf das Bestimmen durch die Vorrichtung, dass die Vorrichtung nicht in der Lage ist, während des Entdeckungsfensters die Datenpfadanforderung zur anderen Vorrichtung zu übertragen, Übertragen (206) eines Weckframes nach dem Entdeckungsfenster zur anderen Vorrichtung und nach der Übertragung des Weckframes Übertragen (208) der Datenpfadanforderung während eines Verfügbarkeitsfensters (508) zur anderen Vorrichtung.

2. Verfahren nach Anspruch 1, wobei der Dienstentdeckungsframe eine Startzeit und eine Dauer eines potenziellen Verfügbarkeitsfensters anzeigt, und wobei das Verfügbarkeitsfenster (508) die Startzeit und die Dauer des potenziellen Verfügbarkeitsfensters aufweist.

3. Verfahren nach Anspruch 1 oder 2, wobei sich die andere Vorrichtung zwischen dem Entdeckungsfenster (500) und dem Verfügbarkeitsfenster (508) in einem Energiesparmodus befindet.

4. Verfahren nach einem der vorhergehenden Ansprüche, wobei der Weckframe via eine Weckfunkschnittstelle (56) der Vorrichtung übertragen (206) wird, und wobei die Datenpfadanforderung via eine Hauptfunkschnittstelle (52) der Vorrichtung übertragen (204; 208) wird.

5. Verfahren nach einem der vorhergehenden Ansprüche, wobei die andere Vorrichtung eine Dienstanbietervorrichtung ist.

6. Verfahren nach einem der vorhergehenden Ansprüche, wobei der Dienstentdeckungsframe gemäß einer Wi-Fi-Neighbor-Awareness-Vernetzungstechnologie ein veröffentlichender Typ ist.

7. Verfahren nach einem der vorhergehenden Ansprüche, wobei der Weckframe während eines Weckfunkverfügbarkeitsfensters, das im Dienstentdeckungsframe kommuniziert wird, übertragen (206) wird.

8. Vorrichtung, die Mittel zum Durchführen von Folgendem umfasst:
Empfangen (200) eines Dienstentdeckungsframes während eines Entdeckungsfensters (500) von einer anderen Vorrichtung;
in Reaktion auf das Bestimmen (202), dass die Vorrichtung in der Lage ist, während des Entdeckungsfensters eine Datenpfadanforderung zur anderen Vorrichtung zu übertragen, Veranlassen der Übertragung (204) der Datenpfadanforderung während des Entdeckungsfensters zur anderen Vorrichtung; und
in Reaktion auf das Bestimmen, dass die Vorrichtung nicht in der Lage ist, während des Entdeckungsfensters die Datenpfadanforderung zur anderen Vorrichtung zu übertragen, Veranlassen des Übertragens (206) eines Weckframes nach dem Entdeckungsfenster zur anderen Vorrichtung und nach der Übertragung des Weckframes Übertragung (208) der Datenpfadanforderung während eines Verfügbarkeitsfensters (508) zur anderen Vorrichtung.

9. Vorrichtung nach Anspruch 8, wobei der Dienstentdeckungsframe eine Startzeit und eine Dauer eines potenziellen Verfügbarkeitsfensters anzeigt, und wobei das Verfügbarkeitsfenster (508) die Startzeit und die Dauer des potenziellen Verfügbarkeitsfensters aufweist.

10. Vorrichtung nach Anspruch 8 oder 9, wobei sich die andere Vorrichtung zwischen dem Entdeckungsfenster (500) und dem Verfügbarkeitsfenster (508) in einem Energiesparmodus befindet.

11. Vorrichtung nach einem der vorhergehenden Ansprüche 8 bis 10, wobei die Vorrichtung ferner Mittel zum Veranlassen der Übertragung (206) eines Weckframes via eine Weckfunkschnittstelle (56) und der Übertragung (204; 208) der Datenpfadanforderung via eine Hauptfunkschnittstelle (52) umfasst.

12. Vorrichtung nach einem der vorhergehenden Ansprüche 8 bis 11, wobei die andere Vorrichtung eine Dienstanbietervorrichtung ist.

13. Vorrichtung nach einem der vorhergehenden Ansprüche 8 bis 12, wobei der Dienstentdeckungsframe gemäß einer Wi-Fi-Neighbor-Awareness-Vernetzungstechnologie ein veröffentlichender Typ ist.

14. Vorrichtung, die Mittel zum Durchführen von Folgendem umfasst:
Übertragen (300) eines Dienstentdeckungsframes via eine Hauptfunkschnittstelle (12) während eines Entdeckungsfensters (500), wobei der Dienstentdeckungsframe ein potenzielles Verfügbarkeitsfenster anzeigt;
Eintreten (302) in einen Energiesparmodus, in dem die Hauptfunkschnittstelle deaktiviert ist, nach Übertragen des Dienstentdeckungsframes;
in Reaktion auf das Empfangen (304) eines Weckframes während des Energiesparmodus via eine Weckfunkschnittstelle von einer anderen Vorrichtung, Aktivieren der Hauptfunkschnittstelle für das potenzielle Verfügbarkeitsfenster und Empfangen (306) einer Datenpfadanforderung während des potenziellen Verfügbarkeitsfensters via die Hauptfunkschnittstelle von der anderen Vorrichtung;
in Reaktion auf das Nichtempfangen des Weckframes während des Energiesparmodus, Verbleiben im Energiesparmodus während des potenziellen Verfügbarkeitsfensters.

15. Vorrichtung nach einem der vorhergehenden Ansprüche 8 bis 14, wobei die Mittel Folgendes umfassen:
mindestens einen Prozessor; und
mindestens einen Speicher, der Computerprogrammcode umfasst, wobei der mindestens eine Speicher und der Computerprogrammcode dazu ausgelegt sind, mit dem mindestens einen Prozessor die Durchführung der Vorrichtung zu veranlassen.

## Revendications

1. Procédé comprenant :
la réception (200), par un appareil d'un autre appareil pendant une fenêtre d'exploration (500), d'une trame d'exploration de service ;
en déterminant (202), par l'appareil, que l'appareil est en mesure de transmettre une demande de chemin de données à l'autre appareil pendant la fenêtre d'exploration, la transmission (204) de la demande de chemin de données à l'autre appareil pendant la fenêtre d'exploration ; et
en déterminant, par l'appareil, que l'appareil n'est pas en mesure de transmettre la demande de chemin de données à l'autre appareil pendant la fenêtre d'exploration, la transmission (206) d'une trame de réveil à l'autre appareil après la fenêtre d'exploration, et la transmission (208) de la demande de chemin de données à l'autre appareil pendant une fenêtre de disponibilité (508) après ladite transmission de la trame de réveil.

2. Procédé de la revendication 1, dans lequel la trame d'exploration de service indique une heure de début et une durée d'une fenêtre de disponibilité potentielle, et dans lequel la fenêtre de disponibilité (508) comporte l'heure de début et la durée de la fenêtre de disponibilité potentielle.

3. Procédé de la revendication 1 ou 2, dans lequel l'autre appareil est en mode d'économie d'énergie entre la fenêtre d'exploration (500) et la fenêtre de disponibilité (508).

4. Procédé de l'une des revendications précédentes, dans lequel la trame de réveil est transmise (206) via une interface radio de réveil (56) de l'appareil, et dans lequel la demande de chemin de données est transmise (204 ; 208) via une interface radio principale (52) de l'appareil.

5. Procédé de l'une des revendications précédentes, dans lequel l'autre appareil est un appareil de fournisseur de services.

6. Procédé de l'une des revendications précédentes, dans lequel la trame d'exploration de service est de type publication selon une technologie de réseau de sensibilisation au voisinage Wifi.

7. Procédé de l'une des revendications précédentes, dans lequel la trame de réveil est transmise (206) pendant une fenêtre de disponibilité radio de réveil communiquée dans la trame d'exploration de service.

8. Appareil comprenant un moyen pour effectuer ce qui suit :
recevoir (200), d'un autre appareil pendant une fenêtre d'exploration (500), une trame d'exploration de service ;
en déterminant (202) que l'appareil est en mesure de transmettre une demande de chemin de données à l'autre appareil pendant la fenêtre d'exploration, provoquer la transmission (204) de la demande de chemin de données à l'autre appareil pendant la fenêtre d'exploration ; et
en déterminant que l'appareil n'est pas en mesure de transmettre la demande de chemin de données à l'autre appareil pendant la fenêtre d'exploration, provoquer la transmission (206) d'une trame de réveil à l'autre appareil après la fenêtre d'exploration et la transmission (208) de la demande de chemin de données à l'autre appareil pendant une fenêtre de disponibilité (508) après ladite transmission de la trame de réveil.

9. Appareil de la revendication 8, dans lequel la trame d'exploration de service indique une heure de début et une durée d'une fenêtre de disponibilité potentielle, et dans lequel la fenêtre de disponibilité (508) comporte l'heure de début et la durée de la fenêtre de disponibilité potentielle.

10. Appareil de la revendication 8 ou 9, dans lequel l'autre appareil est en mode d'économie d'énergie entre la fenêtre d'exploration (500) et la fenêtre de disponibilité (508).

11. Appareil de l'une des revendications précédentes 8 à 10, dans lequel l'appareil comprend en outre des moyens pour provoquer la transmission (206) de la trame de réveil via une interface radio de réveil (56) et la transmission (204 ; 208) de la demande de chemin de données via une interface radio principale (52).

12. Appareil de l'une des revendications précédentes 8 à 11, dans lequel l'autre appareil est un appareil de fournisseur de services.

13. Appareil de l'une des revendications précédentes 8 à 12, dans lequel la trame d'exploration de service est de type publication selon une technologie de réseau de sensibilisation au voisinage Wifi.

14. Appareil comprenant un moyen pour effectuer ce qui suit :
transmettre (300) une trame d'exploration de service via une interface radio principale (12) pendant une fenêtre d'exploration (500), la trame d'exploration de service indiquant une fenêtre de disponibilité potentielle ;
entrer (302), lors de la transmission de la trame d'exploration de service, dans un mode d'économie d'énergie dans lequel l'interface radio principale est désactivée ;
en réponse à la réception (304) d'une trame de réveil via une interface radio de réveil d'un autre appareil en mode d'économie d'énergie, activer l'interface radio principale pour la fenêtre de disponibilité potentielle et recevoir (306) de l'autre appareil une demande de chemin de données via l'interface radio principale pendant la fenêtre de disponibilité potentielle ;
en réponse à la non-réception de la trame de réveil en mode d'économie d'énergie, rester en mode d'économie d'énergie pendant la fenêtre de disponibilité potentielle.

15. Appareil de l'une des revendications précédentes 8 à 14, dans lequel le moyen comprend :
au moins un processeur ; et
au moins une mémoire comprenant un code de programme informatique, l'au moins une mémoire et le code de programme informatique étant configurés, avec l'au moins un processeur, pour assurer le fonctionnement de l'appareil.
